# EUROPEAN PATENT SPECIFICATION

(11) **EP 2 690 904 B1**
(45) Date of publication and mention of the grant of the patent: **04.11.2015**
(21) Application number: 12776859.6
(22) Date of filing: 25.04.2012
(51) Int. Cl.: H04W 74/08, H04W 28/20

(54) **METHOD, DEVICE AND WIRELESS LOCAL AREA NETWORK FOR MULTI-USER DATA TRANSMISSION**
VERFAHREN, VORRICHTUNG UND DRACHTLOSES LOKALES NETZWERK FÜR MEHRNUTZER-DATENÜBERTRAGUNG
PROCÉDÉ, DISPOSITIF ET RÉSEAU LOCAL SANS FIL POUR UNE TRANSMISSION DE DONNÉES MULTIUTILISATEUR

(30) Priority: 29.04.2011 CN 201110111350; 20.09.2011 CN 201110280175
(43) Date of publication of application: 29.01.2014
(73) Proprietor: Huawei Technologies Co., Ltd., Longgang District Shenzhen, Guangdong 518129 (CN)
(72) Inventor: YANG, Lvxi, Shenzhen Guangdong 518129 (CN); LI, Hao, Shenzhen Guangdong 518129 (CN); LI, Chunguo, Shenzhen Guangdong 518129 (CN); WU, Tianyu, Shenzhen Guangdong 518129 (CN)
(74) Representative: Thun, Clemens
(86) International application number: PCT/CN2012/074641
(87) International publication number: WO 2012/146164

(56) References cited:
- WO-A1-2010/095793
- WO-A1-2010/128607
- WO-A1-2011/123631
- WO-A2-2011/100467
- CN-A- 101 084 636
- CN-A- 101 447 905
- US-A1- 2007 081 485
- YUN JOO KIM ET AL: "IEEE 802.11-10/0335r0: Considerations on MU-MIMO Protection in 11ac", INTERNET CITATION, 15 March 2010 (2010-03-15), pages 1-3, XP002645416, Retrieved from the Internet: URL:https://mentor.ieee.org/.../11-10-0335 -00-00ac-considerations-on-mu-mimo-protect ion-in-11ac.ppt [retrieved on 2011-06-28]
- SANTOSH ABRAHAM (QUALCOMM): "DL MU-MIMO performance with QoS traffic and OBSS ; 11-10-0839-00-00ac-dl-mu-mimo-performance- with-qos-traffic-and-obss", IEEE DRAFT; 11-10-0839-00-00AC-DL-MU-MIMO-PERFORMANCE- WITH-QOS-TRAFFIC-AND-OBSS, IEEE-SA MENTOR, PISCATAWAY, NJ USA, vol. 802.11ac, 13 July 2010 (2010-07-13), pages 1-11, XP017676556, [retrieved on 2010-07-13]

## Description

### FIELD OF THE INVENTION

The present invention relates to communications technologies, and in particular, to a method an apparatus and a wireless local area network for multi-user data transmission.

### BACKGROUND OF THE INVENTION

A mechanism of supporting one kind of transmission opportunity (TXOP, Transmission opportunity) in a wireless local area network means that after one user obtains one channel access opportunity through competition, multiple data frames may be transmitted continuously to one or more users in a certain time. At present, a single-user TXOP (SU TXOP) is supported in a current standard, and a multi-user TXOP (MU TXOP, Multi-User TXOP, multi-user transmission opportunity) is added in a new standard. Now it is required that in the time of transmitting the whole multi-user TXOP, at least one primary user that transmits a primary service type communicates with an AP.

A transmission bandwidth of an AP (access point) device or a VHT STA (very high throughput STA) has been expanded from original 20 MHz and 40 MHz to 80 MHz and 160 MHz, thereby promoting a communication throughput of a system. However, in consideration of compatibility, a device (AP and VHT STA) needs to have a capability of performing sending and reception on the four bandwidths at the same time. A channel bandwidth that exceeds 20 MHz (40 MHz, 80 MHz, and 160 MHz) is divided into several 20 MHz channels, one of which is a primary 20 M channel, and the remaining are all secondary 20 M channels.

At present, another way to improve the throughput is that the AP transmits data to multiple users (VHT STA) in one TXOP at the same time. After obtaining a TXOP transmission opportunity, and before transmitting data to multiple users, the AP must schedule these users. A method generally adopted is to send an RTS (request to send) to a user to be scheduled, and the user responds with a CTS (clear to send). The RTS and the CTS are control frames that are in common use and their sending bandwidth is 20 MHz. Because of the expansion of a data bandwidth at present, a selected demand supports adoption of sending the RTS and the CTS on each 20 MHz of a wider bandwidth. For example, before the AP sends 80 MHz data, an RTS with completely the same frame format must be sent first on each 20 MHz sub-band of the 80 MHz bandwidth at the same time, and the user responds with a CTS on each corresponding available 20 MHz channel (without interference).

There are mainly two functions for exchange between the RTS and the CTS in multi-user transmission, and a first function is to detect an available bandwidth of each user. Because a secondary channel is under interference, a user may be unable to send a CTS on the secondary channel to respond to an RTS sent by the AP on the same bandwidth. In this way, by exchanging with an RTS/CTS on each sub-channel of each user sequentially, the AP may determine a currently available bandwidth of each user, thereby determining a bandwidth of transmitting multi-user data. A second function is that a frame format of the RTS and the CTS includes one duration field and a receiving address, and each user that has detected a frame of the RTS or the CTS determines, through comparison, whether the receiving address is the same as an address of this user. If the receiving address is not the same as the address of this user, it is defaulted that in this duration time, a channel is busy (occupied by another device) and the user does not access the channel actively, which is referred to as being set with an NAV (network allocation vector). If the receiving address is the same as the address of this user, the user is not set with any NAV, and responds with a corresponding control frame or data frame. This NAV mechanism ensures the communication reliability of a communicating device in this period of time. However, in multi-user transmission at present, the AP needs to perform RTS/CTS exchange with each user on a wider bandwidth (exceeding 20 MHz) sequentially. However, there is no effective exchanging policy, and a sequence and a bandwidth of sending an RTS to each user are not specified, which may cause that a utilization rate of a channel is reduced, thereby reducing an overall throughput of a system.

Document D1 US2007081485 provides an example of transmitting data to multiple users in one TXOP at the same time.

### SUMMARY OF THE INVENTION

The invention is as defined in claims 1-6.

In the foregoing solutions, before an AP transmits multi-user data, an RTS is sent to only a primary user rather than a secondary user. Therefore, an overhead of a control frame is saved, time of data transmission is increased, and further, a throughput of a system is increased. Furthermore, unnecessary RTS/CTS exchange between the AP and the secondary user is reduced, so that erroneous setting of NAVs of surrounding users is effectively avoided, and these users can access a channel as soon as possible, thereby promoting utilization efficiency of the channel and increasing an overall throughput of the system.

### BRIEF DESCRIPTION OF THE DRAWINGS

FIG. 1 is a flow chart of a method for data sending in a multi-user multiple-input multiple-output MIMO system according to an embodiment of the present invention;
FIG. 2 is a structural block diagram of an apparatus for data sending in a multi-user multiple-input multiple-output MIMO system; and
FIG. 3 is a schematic diagram of a wireless local area network system according to an embodiment of the present invention.

### DETAILED DESCRIPTION OF THE EMBODIMENTS

In multi-user transmission of a wireless local area network at present, an AP needs to perform RTS/CTS exchange with each user on a wider bandwidth (exceeding 20 MHz) sequentially. However, no specific exchanging policy is specified, namely, no sequence and bandwidth of sending an RTS to each user are specified. If the AP sends an RTS to each user on each 20 MHz sub-band, a sending sequence is random, and because a channel condition of each user is random, a case that a secondary channel of a primary user is under interference and all channels of a secondary user are available may exist.

The AP has at least one primary user (primary STA/destination) when performing multi-user data transmission, and a bandwidth of data sent to each user must be the same, and in this way, the bandwidth of data sent by the AP is the same as an available bandwidth of the primary user. If RTSs are sent to secondary users on a frequency band that exceeds the available bandwidth of the primary user, these RTSs are redundant RTSs, and send power is wasted. In addition, these RTSs sent on the frequency band that exceeds the available bandwidth of the primary user may cause that NAVs of a part of STAs are set unnecessarily, and CTSs to which users respond on these channels may also be set with a NAV of a user around the users unnecessarily, so that these users whose NAVs are set cannot access a channel.

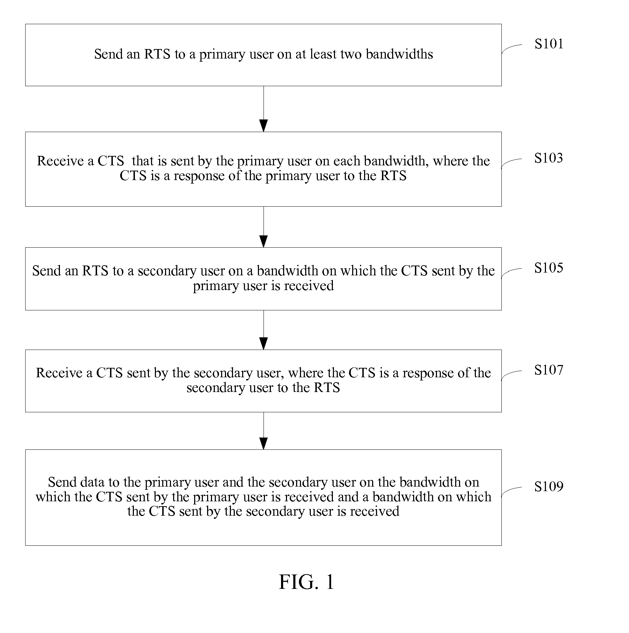

FIG. 1 is a flow chart of a method for data sending in a multi-user multiple-input multiple-output MIMO system according to an embodiment of the present invention. The procedure is a method for an AP or a VHT STA to send data.

S101: Send an RTS to a primary user on at least two bandwidths.

S103: Receive a CTS that is sent by the primary user on each bandwidth, where the CTS is a response of the primary user to the RTS.

S105: Send an RTS to a secondary user on a bandwidth on which the CTS sent by the primary user is received.

S107: Receive a CTS sent by the secondary user, where the CTS is a response of the secondary user to the RTS.

S109: Send data to the primary user and the secondary user on the bandwidth on which the CTS sent by the primary user is received and a bandwidth on which the CTS sent by the secondary user is received.

It can be seen that, in this embodiment, before an AP sends multi-user data, a sequence of sending an RTS is specified to first send an RTS to a primary user, and then send an RTS to a secondary user. A bandwidth on which the RTS is sent to the secondary user by the AP cannot exceed a bandwidth on which the primary user responds with a CTS (namely, an available bandwidth of the primary user). The bandwidth on which the RTS is sent to the secondary user may be dynamically adjusted according to the available bandwidth of the primary user, so as to avoid sending of unnecessary RTSs on some secondary channels and save send power of the AP and send power of the user. Unnecessary RTS/CTS exchange between the AP and the secondary user is reduced, so that erroneous setting of NAVs of surrounding users is effectively avoided, and these users can access a channel as soon as possible, thereby promoting utilization efficiency of the channel and increasing an overall throughput of a system.

Further, the primary user in the foregoing method refers to all users that transmit a primary service type.

Further, the primary user in the foregoing method may be one in number. If there are multiple primary users in multi-user transmission, first an RTS is sent to all the primary users, and then an RTS is sent to the secondary user. If available bandwidths of the primary users are not consistent (not the same), there are two selection solutions. One is that the bandwidth on which the RTS is sent to the secondary user cannot exceed a maximum value of the available bandwidths of the primary users, and the other is that the bandwidth on which the RTS is sent to the secondary user cannot exceed a minimum value of the available bandwidths of the primary users. Any one of them may be selected according to an actual situation. For example, if the AP selects to send information to only a primary user whose available bandwidth is largest and a secondary user in a TXOP, the bandwidth on which the RTS is sent to the secondary user does not exceed the maximum value of the available bandwidths of the primary users. If the AP selects to send information to all the primary users and the secondary user, the bandwidth on which the RTS is sent to the secondary user does not exceed the minimum value of the available bandwidths of the primary users.

Further, in multi-user transmission, an MU-TXOP is decided by a primary service type. The multi-user transmission first needs to ensure a QOS requirement of the primary service type, and a QOS requirement of a secondary service type is relatively lower. Therefore, during implementation, a simplified RTS sending policy may be adopted according to an actual scenario, for example, a scenario that the density of user stations is low.

Before the AP transmits multi-user data, the RTS is sent to only the primary user rather than the secondary user. Therefore, an overhead of a control frame is saved, time of data transmission is increased, and further, a throughput of a system is increased.

An embodiment of the present invention provides an apparatus for data sending, which may be an AP in a wireless local area network, or may be an application AP in processes of sending and receiving MU-MIMO data. Generally, one AP covers multiple user equipments, and may send data to multiple users. The apparatus in this embodiment is configured to implement the procedure of the foregoing method embodiment, and processing processes in the specific method may all be executed in this apparatus.

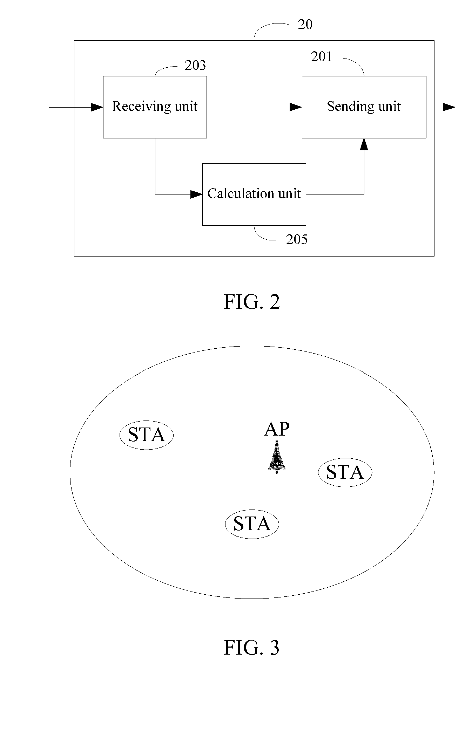

FIG. 2 is a structural block diagram of an apparatus for data sending in a multi-user multiple-input multiple-output MIMO system.

The apparatus includes a sending unit 201 and a receiving unit 203, where
the sending unit 201 is configured to send an RTS to a primary user on at least two bandwidths;
the receiving unit 203 is configured to receive a CTS that is sent by the primary user on each bandwidth, where the CTS is a response of the primary user to the RTS;
the sending unit 201 is further configured to send an RTS to a secondary user on a bandwidth on which the CTS sent by the primary user is received;
the receiving unit 203 receives a CTS sent by the secondary user, where the CTS is a response of the secondary user to the RTS; and
the sending unit 201 is further configured to send data to the primary user and the secondary user on the bandwidth on which the CTS sent by the primary user is received and a bandwidth on which the CTS sent by the secondary user is received.

Further, a calculation unit 205 may further be included, which is configured to, if the number of primary users is greater than one, determine a minimum value of a sum of bandwidths on which CTSs are sent by the primary users; and the sending unit 201 is specifically configured to send the RTS to the secondary user on the bandwidth on which the CTS sent by the primary user is received, where a sum of bandwidths on which the RTS is sent to the secondary user does not exceed a bandwidth with the minimum value, and the primary user in the sending data to the primary user and the secondary user on the bandwidth on which the CTS sent by the primary user is received and on the bandwidth on which the CTS sent by the secondary user is received refers to all the primary users. Further, the calculation unit 205 is further configured to, if the number of the primary users is greater than one, determine a maximum value of the sum of the bandwidths on which the CTSs are sent by the primary users; and the sending unit 201 is specifically configured to send the RTS to the secondary user on the bandwidth on which the CTS sent by the primary user is received, where the sum of the bandwidths on which the RTS is sent to the secondary user does not exceed a bandwidth with the maximum value, and the primary user in the sending data to the primary user and the secondary user on the bandwidth on which the CTS sent by the primary user is received and on the bandwidth on which the CTS sent by the secondary user is received refers to a primary user that corresponds to the maximum value of the sum of the bandwidths on which the CTSs are sent by the primary users.

A wireless local area network system including the foregoing apparatus and user equipments is provided in the following. The wireless system works according to the foregoing method, and processing processes of a specific method may all be executed in the system. Referring to FIG. 3, the system includes an access point AP and multiple user equipments STA, where
the access point AP first sends an RTS to a primary user in the user equipments before sending multi-user data, then sends an RTS to a secondary user in the user equipments, and receives a CTS that responds to the RTS and is sent by the primary user and a CTS that responds to the RTS and is sent by the secondary user, where a bandwidth on which the RTS is sent to the secondary user does not exceed a bandwidth on which the CTS is sent by the primary user; and
the user equipments STA are configured to receive the RTS sent by the access point, and send the CTS to the access point in response to the RTS.

The access point AP may be the foregoing apparatus for data sending in a multi-user multiple-input multiple-output MIMO system, whose specific processing may be to execute each specific processing procedure in the method embodiment.

It can be seen that, with the apparatus and the system in this embodiment, before an AP sends multi-user data, a sequence of sending an RTS is specified to first send an RTS to a primary user, and then send an RTS to a secondary user. A bandwidth on which the RTS is sent to the secondary user by the AP cannot exceed a bandwidth on which the primary user responds with a CTS (namely, an available bandwidth of the primary user). The bandwidth on which the RTS is sent to the secondary user may be dynamically adjusted according to the available bandwidth of the primary user, so as to avoid sending of unnecessary RTSs on some secondary channels and save send power of the AP and send power of the user. Unnecessary RTS/CTS exchange between the AP and the secondary user is reduced, so that erroneous setting of NAVs of surrounding users is effectively avoided, and these users may access a channel as soon as possible, thereby promoting utilization efficiency of the channel and increasing an overall throughput of the system.

Further, an embodiment of the present invention further provides another implementation method: In a multi-user multiple-input multiple-output MIMO transmission system, when an AP adopts an RTS/CTS interaction process to perform transmission opportunity initialization, a first RTS is sent to one of primary users. When the AP adopts a multi-user multiple-input multiple-output MIMO data frame to perform transmission opportunity initialization, a first acknowledgment request is sent to one of the primary users.

The primary user mentioned herein refers to a user whose primary access category (access category, AC) data needs to be transmitted, and a secondary user refers to a user whose other access category data except a primary access category needs to be transmitted. The primary access category refers to an access category of obtaining a channel access opportunity through an enhanced distributed channel access function (enhanced distributed channel access function, EDCAF).

In an application, if a first frame is transmitted successfully in one TXOP, a current transmission opportunity is established. In addition, it is further specified that when multi-user multiple-input multiple-output MIMO transmission is adopted, at least one primary user must be included.

If a target user to which a first RTS is sent is not specified, the following case may occur: When the first RTS is sent to a secondary user, if an AP receives a CTS of the secondary user correctly, a current transmission opportunity is established because a first frame is sent successfully. At this time, if all primary users cannot perform communication because of reasons such as that a channel is under interference, even if the transmission opportunity has been established successfully, data transmission cannot be performed on only the secondary user, which causes waste of transmission time of a system. Therefore, the first RTS is sent to one of the primary users, which may ensure that once the transmission opportunity is established, definitely, a primary user suitable for data transmission exists, so that efficiency of the system may be improved.

A similar case also exists in a scenario that a multi-user multiple-input multiple-output MIMO data frame is adopted to perform transmission opportunity initialization.

When the AP adopts the multi-user multiple-input multiple-output MIMO data frame to perform sending, acknowledgment frames of all target users need to be obtained through sequential polling. A first user that feeds back an acknowledgment frame may adopt an explicit acknowledgment request, or may adopt an implicit acknowledgment request, and other users except the first user adopt an explicit acknowledgment request. The implicit request mentioned herein refers to performing of instant feedback setting in a data frame, the explicit request includes but is not limited to a block acknowledgment request frame (Block Acknowledgment request, BAR), and the acknowledgment frame includes but is not limited to a block acknowledgment frame (Block Acknowledgment, BA). When a first user that requests feedback is a secondary user, if a request of the user is received correctly, but subsequently all primary users cannot feed back an acknowledgment frame because of reasons such as interference, at this time, a case that the transmission opportunity is established successfully but no primary user may perform data transmission may also occur. If the AP cannot perform data sending on only the secondary user, waste of system transmission time is caused. Therefore, a first acknowledgment request is sent to one of the primary users, so that after the transmission opportunity is established, a user whose data needs to be transmitted exists, thereby improving efficiency of the system.

Persons of ordinary skill in the art may understand that all or part of the steps in the method embodiment may be implemented by a program instructing relevant hardware. The program may be stored in a computer readable storage medium. When the program runs, the steps in the method embodiment are performed. The storage medium includes any medium that can store program codes, such as a ROM, a RAM, a magnetic disk, or an optical disk.

## Claims

1. A method for data sending in a multi-user multiple-input multiple-output MIMO system, comprising:
sending a request to send RTS to a primary user on at least two bandwidths (step S101);
receiving a clear to send CTS that is sent by the primary user on each bandwidth, wherein the CTS is a response of the primary user to the RTS (step S103);
if the number of primary users is greater than one, firstly a RTS is sent to all primary users;
sending an RTS to a secondary user on the at least one bandwidth on which the CTS sent by one of the primary users is received (step S105);
receiving a CTS sent by the secondary user, wherein the CTS is a response of the secondary user to the RTS (step S107); and
sending data to one of the primary users and the secondary user on the at least one bandwidth on which the CTS sent by the one of the primary users and the CTS sent by the secondary user are received (step S109),
wherein the sending the RTS to the secondary user on the at least one bandwidth on which the CTS sent by one of the primary users is received then comprises:
determining a maximum value of the bandwidths on which CTSs are sent by the primary users; and
wherein the bandwidth on which the RTS is sent to the secondary user does not exceed the bandwidth with the maximum value, and
wherein the primary user of the step of sending data refers to a primary user that corresponds to the maximum value of the bandwidths on which the CTSs are sent by the primary users.

2. The method according to claim 1, wherein if the number of primary users is greater than one, the sending the RTS to the secondary user on the at least one bandwidth on which the CTS sent by one of the primary users is received comprises:
determining a minimum value of bandwidths on which CTSs are sent by the primary users; and
sending the RTS to the secondary user on the at least one bandwidth on which the CTS sent by one of the primary users is received, wherein the bandwidth on which the RTS is sent to the secondary user does not exceed a bandwidth with the minimum value, and
wherein the primary user of the step of sending data refers to all the primary users.

3. An apparatus (20) for data sending, comprising:
a sending unit (201), configured to send an request to send RTS to a primary user on at least two bandwidths ; and
a receiving unit (203), configured to receive a clear to send CTS that is sent by the primary user on each bandwidth, wherein the CTS is a response of the primary user to the RTS, wherein the sending unit (201) is further configured to send a request to send RTS to all primary users if the number of primary users is greater than one; wherein
the sending unit (201) is further configured to send an RTS to a secondary user on the at least one bandwidth on which the CTS sent by one of the primary users is received;
the receiving unit (203) is further configured to receive a CTS sent by the secondary user, wherein the CTS is a response of the secondary user to the RTS; and
the sending unit (201) is further configured to send data to one of the primary users and the secondary user on at least one bandwidth on which the CTS sent by one of the primary users and the CTS sent by the secondary user are received,
a calculation unit (205) is configured to, if the number of primary users is greater than one, determine a maximum value of bandwidths on which CTSs are sent by the primary users; and
the sending unit (201) is specifically configured to send the RTS to the secondary user on the at least one bandwidth on which the CTS sent by one of the primary users is received, and the bandwidth on which the RTS is sent to the secondary user does not exceed the bandwidth with the maximum value, wherein
the primary user of the step of sending data refers to a primary user that corresponds to the maximum value of the bandwidths on which the CTSs are sent by the primary users.

4. The apparatus (20) according to claim 3, further comprising:
the calculation unit (205), further configured to, if the number of primary users is greater than one, determine a minimum value of bandwidths on which CTSs are sent by the primary users, wherein
the sending unit (201) is specifically configured to send the RTS to the secondary user on the at least one bandwidth on which the CTS sent by one of the primary users is received, wherein the bandwidth on which the RTS is sent to the secondary user does not exceed the bandwidth with the minimum value; and
the primary user of the step of sending data refers to all the primary users.

5. A wireless local area network communication system, comprising an access point and user equipments, wherein
the access point is configured to firstly send an request to send RTS to a user equipment of a primary user on at least two bandwidths before sending multi-user data, and is further configured to then send an RTS to a user equipment of a secondary user on the at least one bandwidth on which the CTS sent by one of the primary users is received and to receive a clear to send CTS that responds to the RTS and is sent by the primary user on each bandwidth and a CTS that responds to the RTS and is sent by the secondary user; and
if the number of primary users is greater than one, the access point is configured to firstly send an RTS to all primary users ;
the user equipment of the primary user is configured to receive the RTS sent by the access point on the at least two bandwidths, and send the CTS to the access point in response to the RTS on each bandwidth and the user equipment of the secondary user is configured to receive an RTS on the at least one bandwidth on which the CTS sent by the user equipment of one of the primary users is received and is further configured to send a CTS, wherein the CTS is a response of the user equipment of the secondary user, wherein the access point is further configured to send data to one of the primary users and the secondary user on at least one bandwidth on which the CTS sent by one of the primary users and the CTS sent by the secondary user are received, wherein the access point is further configured to:
determine a maximum value of bandwidths on which CTSs are sent by the primary users; and
send the RTS to the secondary user on the at least one bandwidth on which the CTS sent by one of the primary users is received, wherein the bandwidths on which the RTS is sent to the secondary user does not exceed a bandwidth with the maximum value, and
the primary user of the step of sending data refers to a primary user that corresponds to the maximum value of the bandwidths on which the CTSs are sent by the primary users.

6. The system according to claim 5, wherein if the number of primary users is greater than one, the access point is further configured to:
determine a minimum value of bandwidths on which CTSs are sent by the primary users; and
send the RTS to the secondary user on the at least one bandwidth on which the CTS sent by one of the primary users is received, wherein the bandwidth on which the RTS is sent to the secondary user does not exceed a bandwidth with the minimum value, and
the primary user of the step of sending data refers to all the primary users.

## Patentansprüche

1. Verfahren zum Datensenden in einem Mehrfach-Anwender-Mehrfach-Eingabe-Mehrfach-Ausgabe-System (Mehrfach-Anwender-MIMO-System), das Folgendes umfasst:
Senden einer Sendeanforderung, RTS, zu einem primären Anwender auf wenigstens zwei Bandbreiten (Schritt S101);
Empfangen einer Sendeerlaubnis, CTS, die durch den primären Anwender auf jeder Bandbreite gesendet wird, wobei die CTS eine Antwort des primären Anwenders auf die RTS ist (Schritt S103);
falls die Anzahl von primären Anwendern größer als eins ist, wird zuerst eine RTS zu allen primären Anwendern gesendet;
Senden einer RTS zu einem sekundären Anwender auf der wenigstens einen Bandbreite, auf der die CTS, die durch einen der primären Anwender gesendet wird, empfangen wird (Schritt S105);
Empfangen einer CTS, die durch den sekundären Anwender gesendet wird, wobei die CTS eine Antwort des sekundären Anwenders auf die RTS ist (Schritt S107); und
Senden von Daten zu einem der primären Anwender und dem sekundären Anwender auf der wenigstens einen Bandbreite, auf der die CTS, die durch den einen der primären Anwender gesendet wird, und die CTS, die durch den sekundären Anwender gesendet wird, empfangen werden (Schritt S109);
wobei das Senden der RTS zu dem sekundären Anwender auf der wenigstens einen Bandbreite, auf der die CTS, die durch einen der primären Anwender gesendet wird,
empfangen wird, dann Folgendes umfasst:
Bestimmen eines Maximalwerts der Bandbreiten, auf denen CTSs durch die primären Anwender gesendet werden; und
wobei die Bandbreite, auf der die RTS zu dem sekundären Anwender gesendet wird, die Bandbreite mit dem Maximalwert nicht übersteigt, und
wobei sich der primäre Anwender aus dem Schritt des Datensendens auf einen primären Anwender bezieht, der dem Maximalwert der Bandbreiten entspricht, auf denen die CTSs durch die primären Anwender gesendet werden.

2. Verfahren nach Anspruch 1, wobei, falls die Anzahl von primären Anwendern größer als eins ist, das Senden der RTS zu dem sekundären Anwender auf der wenigstens einen Bandbreite, auf der die CTS, die durch einen der primären Anwender gesendet wird, empfangen wird, Folgendes umfasst:
Bestimmen eines Minimalwerts von Bandbreiten, auf denen CTSs durch die primären Anwender gesendet werden; und
Senden der RTS zu dem sekundären Anwender auf der wenigstens einen Bandbreite, auf der die CTS, die durch einen der primären Anwender gesendet wird, empfangen wird, wobei die Bandbreite, auf der die RTS zu dem sekundären Anwender gesendet wird, eine Bandbreite mit dem Minimalwert nicht übersteigt, und wobei sich der primäre Anwender aus dem Schritt des Datensendens auf alle primären Anwerider bezieht.

3. Vorrichtung (20) zum Datensenden, die Folgendes umfasst:
eine Sendeeinheit (201), die konfiguriert ist, eine Sendeanforderung, RTS, zu einem primären Anwender auf wenigstens zwei Bandbreiten zu senden; und
eine Empfangseinheit (203), die konfiguriert ist, eine Sendeerlaubnis, CTS, zu empfangen, die durch den primären Anwender auf jeder Bandbreite gesendet wird, wobei die CTS eine Antwort des primären Anwenders auf die RTS ist, wobei die Sendeeinheit (201) ferner konfiguriert ist, eine Sendeanforderung, RTS, zu allen primären Anwendern zu senden, falls die Anzahl von primären Anwendern größer als eins ist, wobei
die Sendeeinheit (201) ferner konfiguriert ist, eine RTS zu einem sekundären Anwender auf der wenigstens einen Bandbreite zu senden, auf der die CTS, die durch einen der primären Anwender gesendet wird, empfangen wird;
die Empfangseinheit (203) ferner konfiguriert ist, eine CTS, die durch den sekundären Anwender gesendet wird, zu empfangen, wobei die CTS eine Antwort des sekundären Anwenders auf die RTS ist; und
die Sendeeinheit (201) ferner konfiguriert ist, Daten zu einem der primären Anwender und dem sekundären Anwender auf wenigstens einer Bandbreite zu senden, auf der die CTS, die durch einen der primären Anwender gesendet wird, und die CTS, die durch den sekundären Anwender gesendet wird, empfangen werden,
eine Berechnungseinheit (205) konfiguriert ist, falls die Anzahl von primären Anwendern größer als eins ist, einen Maximalwert der Bandbreiten, auf denen CTSs durch die primären Anwender gesendet werden, zu bestimmen; und
die Sendeeinheit (201) spezifisch konfiguriert ist, die RTS zu dem sekundären Anwender auf der wenigstens einen Bandbreite zu senden, auf der die CTS, die durch einen der primären Anwender gesendet wird, empfangen wird, und die Bandbreite,
auf der die RTS zu dem sekundären Anwender gesendet wird, die Bandbreite mit dem Maximalwert nicht übersteigt, wobei
sich der primäre Anwender aus dem Schritt des Datensendens auf einen primären Anwender bezieht, der dem Maximalwert der Bandbreiten entspricht, auf denen die CTSs durch die primären Anwender gesendet werden.

4. Vorrichtung (20) nach Anspruch 3, die ferner Folgendes umfasst:
die Berechnungseinheit (205), die ferner konfiguriert ist, falls die Anzahl von primären Anwendern größer als eins ist, einen Minimalwert der Bandbreiten, auf denen CTSs durch die primären Anwender gesendet werden, zu bestimmen, wobei die Sendeeinheit (201) spezifisch konfiguriert ist, die RTS zu dem sekundären Anwender auf der wenigstens einen Bandbreite zu senden, auf der die CTS, die durch einen der primären Anwender gesendet wird, empfangen wird, wobei die Bandbreite, auf der die RTS zu dem sekundären Anwender gesendet wird, die Bandbreite mit dem Minimalwert nicht übersteigt; und
sich der primäre Anwender aus dem Schritt des Datensendens auf alle primären Anwender bezieht.

5. Drahtloses Kommunikationssystem eines lokalen Netzes, das einen Zugangspunkt und Anwendergeräte umfasst, wobei
der Zugangspunkt konfiguriert ist, zuerst eine Sendeanforderung, RTS, zu einem Anwendergerät eines primären Anwenders auf wenigstens zwei Bandbreiten vor dem Senden von Mehrfach-Anwender-Daten zu senden, und ferner konfiguriert ist, dann eine RTS zu einem Anwendergerät eines sekundären Anwenders auf der wenigstens einen Bandbreite zu senden, auf der die CTS, die durch einen der primären Anwender gesendet wird, empfangen wird, und eine Sendeerlaubnis, CTS, die auf die RTS antwortet und durch den primären Anwender auf jeder Bandbreite gesendet wird, und eine CTS, die auf die RTS antwortet und durch den sekundären Anwender gesendet wird, zu empfangen; und
falls die Anzahl von primären Anwendern größer als eins ist, der Zugangspunkt konfiguriert ist, zuerst eine RTS zu allen primären Anwendern zu senden;
das Anwendergerät des primären Anwenders konfiguriert ist, die RTS, die durch den Zugangspunkt auf den wenigstens zwei Bandbreiten gesendet wird, zu empfangen und die CTS zu dem Zugangspunkt in Reaktion auf die RTS auf jeder Bandbreite zu senden, und das Anwendergerät des sekundären Anwenders konfiguriert ist, eine RTS auf der wenigstens einen Bandbreite, auf der die CTS, die durch das Anwendergerät eines der primären Anwender gesendet wird, empfangen wird, zu empfangen, und ferner konfiguriert ist, eine CTS zu senden, wobei die CTS eine Antwort des Anwendergeräts des sekundären Anwenders ist, wobei der Zugangspunkt ferner konfiguriert ist, Daten zu einem der primären Anwender und dem sekundären Anwender auf wenigstens einer Bandbreite zu senden, auf der die CTS, die durch einen der primären Anwender gesendet wird, und die CTS, die durch den sekundären Anwender gesendet wird, empfangen werden, wobei der Zugangspunkt ferner konfiguriert ist:
einen Maximalwert von Bandbreiten, auf denen CTSs durch die primären Anwender gesendet werden, zu bestimmen; und
die RTS zu dem sekundären Anwender auf der wenigstens einen Bandbreite zu senden, auf der die CTS, die durch einen der primären Anwender gesendet wird, empfangen wird, wobei die Bandbreiten, auf denen die RTS zu dem sekundären Anwender gesendet wird, eine Bandbreite mit dem Maximalwert nicht übersteigt, und sich der primäre Anwender aus dem Schritt des Datensendens auf einen primären Anwender bezieht, der dem Maximalwert der Bandbreiten entspricht, auf denen die CTSs durch die primären Anwender gesendet werden.

6. System nach Anspruch 5, wobei, falls die Anzahl von primären Anwendern größer als eins ist, der Zugangspunkt ferner konfiguriert ist:
einen Minimalwert von Bandbreiten, auf denen CTSs durch die primären Anwender gesendet werden, zu bestimmen; und
die RTS zu dem sekundären Anwender auf der wenigstens einen Bandbreite zu senden, auf der die CTS, die durch einen der primären Anwender gesendet wird,
empfangen wird, wobei die Bandbreite, auf der die RTS zu dem sekundären Anwender gesendet wird, eine Bandbreite mit dem Minimalwert nicht überschreitet,
und
sich der primäre Anwender aus dem Schritt des Datensendens auf alle primären Anwender bezieht.

## Revendications

1. Procédé pour envoyer des données dans un système multi-entrée multi-sortie, dit MIMO, multi-utilisateur, le procédé comprenant les étapes consistant à :
envoyer une demande pour émettre, dite RTS, à un utilisateur primaire sur au moins deux largeurs de bande (étape S101) ;
recevoir un prêt à émettre, dit CTS, qui est envoyé par l'utilisateur primaire sur chaque largeur de bande, lequel CTS est une réponse de l'utilisateur primaire à la RTS (étape S103) ;
si le nombre d'utilisateurs primaires est supérieur à un, une RTS étant en premier lieu envoyée à tous les utilisateurs primaires ;
envoyer une RTS à un utilisateur secondaire sur ladite au moins une largeur de bande sur laquelle le CTS envoyé par l'un des utilisateurs primaires est reçu (étape S105) ;
recevoir un CTS envoyé par l'utilisateur secondaire, lequel CTS est une réponse de l'utilisateur secondaire à la RTS (étape S107) ; et
envoyer des données à l'un des utilisateurs primaires et à l'utilisateur secondaire sur ladite au moins une largeur de bande sur laquelle le CTS envoyé par ledit un des utilisateurs primaires et le CTS envoyé par l'utilisateur secondaire sont reçus (étape S109),
dans lequel l'étape consistant à envoyer la RTS à l'utilisateur secondaire sur ladite au moins une largeur de bande sur laquelle le CTS envoyé par l'un des utilisateurs primaires est reçu comprend ensuite l'étape consistant à :
déterminer une valeur maximale des largeurs de bande sur lesquelles des CTS sont envoyés par les utilisateurs primaires ; et
dans lequel la largeur de bande sur laquelle la RTS est envoyée à l'utilisateur secondaire ne dépasse pas la largeur de bande affichant la valeur maximale, et
dans lequel l'utilisateur primaire à l'étape consistant à envoyer des données s'entend comme un utilisateur primaire qui correspond à la valeur maximale des largeurs de bande sur lesquelles les CTS sont envoyés par les utilisateurs primaires.

2. Procédé selon la revendication 1, dans lequel, si le nombre d'utilisateurs primaires est supérieur à un, l'étape consistant à envoyer la RTS à l'utilisateur secondaire sur ladite au moins une largeur de bande sur laquelle le CTS envoyé par l'un des utilisateurs primaires est reçu comprend les étapes consistant à :
déterminer une valeur minimale de largeurs de bande sur lesquelles des CTS sont envoyés par les utilisateurs primaires ; et
envoyer la RTS à l'utilisateur secondaire sur ladite au moins une largeur de bande sur laquelle le CTS envoyé par l'un des utilisateurs primaires est reçu, la largeur de bande sur laquelle la RTS est envoyée à l'utilisateur secondaire ne dépassant pas une largeur de bande affichant la valeur minimale, et
dans lequel l'utilisateur primaire à l'étape consistant à envoyer des données s'entend comme tous les utilisateurs primaires.

3. Appareil (20) pour envoyer des données, comprenant :
une unité d'envoi (201), configurée pour envoyer une demande pour émettre, dite RTS, à un utilisateur primaire sur au moins deux largeurs de bande ; et
une unité de réception (203), configurée pour recevoir un prêt à émettre, dit CTS, qui est envoyé par l'utilisateur primaire sur chaque largeur de bande, lequel CTS est une réponse de l'utilisateur primaire à la RTS, l'unité d'envoi (201) étant configurée en outre pour envoyer une demande pour émettre, dite RTS, à tous les utilisateurs primaires si le nombre d'utilisateurs primaires est supérieur à un ;
dans lequel
l'unité d'envoi (201) est configurée en outre pour envoyer une RTS à un utilisateur secondaire sur ladite au moins une largeur de bande sur laquelle le CTS envoyé par l'un des utilisateurs primaires est reçu ;
l'unité de réception (203) est configurée en outre pour recevoir un CTS envoyé par l'utilisateur secondaire, lequel CTS est une réponse de l'utilisateur secondaire à la RTS ; et
l'unité d'envoi (201) est configurée en outre pour envoyer des données à l'un des utilisateurs primaires et à l'utilisateur secondaire sur au moins une largeur de bande sur laquelle le CTS envoyé par l'un des utilisateurs primaires et le CTS envoyé par l'utilisateur secondaire sont reçus,
une unité de calcul (205) est configurée, si le nombre d'utilisateurs primaires est supérieur à un, pour déterminer une valeur maximale des largeurs de bande sur lesquelles des CTS sont envoyés par les utilisateurs primaires ; et
l'unité d'envoi (201) est tout particulièrement configurée pour envoyer la RTS à l'utilisateur secondaire sur ladite au moins une largeur de bande sur laquelle le CTS envoyé par l'un des utilisateurs primaires est reçu, et la largeur de bande sur laquelle la RTS est envoyée à l'utilisateur secondaire ne dépasse pas la largeur de bande affichant la valeur maximale,
dans lequel l'utilisateur primaire à l'étape consistant à envoyer des données s'entend comme un utilisateur primaire qui correspond à la valeur maximale des largeurs de bande sur lesquelles les CTS sont envoyés par les utilisateurs primaires.

4. Appareil (20) selon la revendication 3, comprenant en outre :
l'unité de calcul (205), configurée en outre, si le nombre d'utilisateurs primaires est supérieur à un, pour déterminer une valeur minimale de largeurs de bande sur lesquelles des CTS sont envoyés par les utilisateurs primaires, dans lequel l'unité d'envoi (201) est plus particulièrement configurée pour envoyer la RTS à l'utilisateur secondaire sur ladite au moins une largeur de bande sur laquelle le CTS envoyé par l'un des utilisateurs primaires est reçu, la largeur de bande sur laquelle la RTS est envoyée à l'utilisateur secondaire ne dépassant pas la largeur de bande affichant la valeur minimale ; et
l'utilisateur primaire à l'étape consistant à envoyer des données s'entend comme tous les utilisateurs primaires.

5. Système de communication de réseau local sans fil, comprenant un point d'accès et des équipements d'utilisateur, dans lequel
le point d'accès est configuré pour envoyer en premier lieu une demande pour émettre, dite RTS, à un équipement d'utilisateur d'un utilisateur primaire sur au moins deux largeurs de bande avant d'envoyer des données multi-utilisateur, et est configuré en outre pour envoyer ensuite une RTS à un équipement d'utilisateur d'un utilisateur secondaire sur ladite au moins une largeur de bande sur laquelle le CTS envoyé par l'un des utilisateurs primaires est reçu et pour recevoir un prêt à émettre, dit CTS, qui répond à la RTS et qui est envoyé par l'utilisateur primaire sur chaque largeur de bande et un CTS qui répond à la RTS et qui est envoyé par l'utilisateur secondaire ; et
si le nombre d'utilisateurs primaires est supérieur à un, le point d'accès est configuré pour envoyer en premier lieu une RTS à tous les utilisateurs primaires ; l'équipement d'utilisateur de l'utilisateur primaire est configuré pour recevoir la RTS envoyée par le point d'accès sur lesdites au moins deux largeurs de bande, et pour envoyer le CTS au point d'accès en réponse à la RTS sur chaque largeur de bande, et l'équipement d'utilisateur de l'utilisateur secondaire est configuré pour recevoir une RTS sur ladite au moins une largeur de bande sur laquelle le CTS envoyé par l'équipement d'utilisateur de l'un des utilisateurs primaires est reçu et est configuré en outre pour envoyer un CTS, lequel CTS est une réponse de l'équipement d'utilisateur de l'utilisateur secondaire,
dans lequel le point d'accès est configuré en outre pour envoyer des données à l'un des utilisateurs primaires et à l'utilisateur secondaire sur au moins une largeur de bande sur laquelle le CTS envoyé par l'un des utilisateurs primaires et le CTS envoyé par l'utilisateur secondaire sont reçus,
dans lequel le point d'accès est configuré en outre pour :
déterminer une valeur maximale des largeurs de bande sur lesquelles des CTS sont envoyés par les utilisateurs primaires ; et
envoyer la RTS à l'utilisateur secondaire sur ladite au moins une largeur de bande sur laquelle le CTS envoyé par l'un des utilisateurs primaires est reçu, la largeur de bande sur laquelle la RTS est envoyée à l'utilisateur secondaire ne dépassant pas une largeur de bande affichant la valeur maximale, et
l'utilisateur primaire à l'étape consistant à envoyer des données s'entend comme un utilisateur primaire qui correspond à la valeur maximale des largeurs de bande sur lesquelles les CTS sont envoyés par les utilisateurs primaires.

6. Système selon la revendication 5, dans lequel, si le nombre d'utilisateurs primaires est supérieur à un, le point d'accès est configuré en outre pour :
déterminer une valeur minimale de largeurs de bande sur lesquelles des CTS sont envoyés par les utilisateurs primaires ; et
envoyer la RTS à l'utilisateur secondaire sur ladite au moins une largeur de bande sur laquelle le CTS envoyé par l'un des utilisateurs primaires est reçu, la largeur de bande sur laquelle la RTS est envoyée à l'utilisateur secondaire ne dépassant pas une largeur de bande affichant la valeur minimale, et
l'utilisateur primaire à l'étape consistant à envoyer des données s'entend comme tous les utilisateurs primaires.
